# FASCICULE DE BREVET EUROPEEN

(11) **EP 3 834 594 B1**
(45) Date de publication et mention de la délivrance du brevet: **07.02.2024**
(21) Numéro de dépôt: 20212915.1
(22) Date de dépôt: 09.12.2020
(51) Int. Cl.: A01C 5/06

(54) **ROUE RACLEUSE POUR SEMOIR**
SCRAPING GAUGE WHEEL FOR SEEDER
ABSTREIFERRAD FÜR SÄMASCHINE

(30) Priorité: 09.12.2019 FR 1913998
(43) Date de publication de la demande: 16.06.2021
(73) Titulaire: OTICO, 77650 Chalmaison (FR)
(72) Inventeur: PHELY, Olivier, 77650 Chalmaison (FR)
(74) Mandataire: Cabinet Netter

(56) Documents cités:
- EP-A1- 1 238 824
- EP-A1- 3 257 345
- AR-A1- 053 782
- US-A- 5 533 793
- US-A1- 2017 208 734

## Description

L'invention a trait à une roue agricole et plus particulièrement une roue qui forme l'accessoire d'un disque de semoir.

Un semoir est une machine agricole que l'on utilise dans un champ pour y semer du grain. Cette machine prend classiquement la forme d'un attelage que l'on déplace à travers le champ à l'aide d'un tracteur ou analogue. Un semoir peut présenter une constitution assez complexe, faite de plusieurs parties, chacune de ces parties étant adaptée à une opération spécifique. Classiquement, un semoir comprend ainsi une partie destinée à ouvrir un ou plusieurs sillons dans le sol, par exemple au moyen de socs, de disques ou de dents, une partie destinée à déposer de la semence ou des graines dans ces sillons et une partie destinée à fermer ces sillons ou tasser la terre, après que la semence ou les graines y ont été déposées.

Pour ouvrir les sillons, certains semoirs sont équipés d'outils en forme de disques, généralement montés par paires sur l'attelage, qui, en roulant, pénètrent le sol de manière à y écarter la terre.

Il est connu d'adjoindre à ces disques, en tant qu'accessoire, une roue agricole comprenant un corps portant une jante et un bandage enfilé sur le corps, autour de cette jante. Cette roue permet de régler la profondeur de travail des disques, en maintenant leur partie active à une profondeur sensiblement constante lorsque le semoir est déplacé. On parle de "roue de jauge" dans la technique.

Le plus souvent, le bandage est de type dit "semi-creux". Un tel bandage comprend une enveloppe en matériau souple autour d'une chambre laissée vide. Un ou plusieurs orifices à travers cette enveloppe maintiennent la chambre en communication fluidique avec l'extérieur du bandage. De ce fait, l'enveloppe présente une forte capacité de déformation en travail, déformation qui contribue au nettoyage du bandage, du moins à éviter que de la terre ne s'y accumule.

Dans certaines circonstances au moins, la terre tend à s'accumuler sur les disques du semoir lorsque ceux-ci travaillent, ce qui les rend moins efficaces. Pour nettoyer ces disques, il est connu d'utiliser des roues de jauge avec des bandages semi-creux dont le profil comprend une lèvre qui fait saillie, au moins axialement, du reste de l'enveloppe. Cette lèvre est agencée de manière à venir frotter contre un disque du semoir, ou le racler, en tirant profit d'un mouvement de rotation relative entre la roue de jauge et le disque.

Des exemples de bandages à lèvre de ce type, lèvre que l'on peut qualifier de "racleuse", sont divulgués par FR 2 885 008 A1 et FR 3 017 265 A1 au nom de la demanderesse, et encore US 5,533,793 au nom de Walker.

Ces bandages donnent globalement satisfaction.

Dans certaines conditions de travail cependant, par exemple lorsque le sol est composé de terres argileuses ou collantes, la lèvre racleuse n'est pas pleinement satisfaisante, en particulier du fait de sa souplesse. L'effet nettoyant produit par une telle lèvre peut se révéler insuffisant.

Dans de telles conditions notamment, il est connu d'utiliser, en remplacement de la lèvre racleuse, une couronne rigide, le plus souvent métallique, solidaire de la roue de jauge. Le bandage est alors généralement dépourvu de lèvre racleuse. Cette couronne peut être rapportée sur le corps de la roue de jauge, par l'intermédiaire d'une pièce qui occupe le voile de cette roue. La couronne peut aussi être intégrée à la jante, en tant que portion axiale de celle-ci, dans le prolongement du siège, comme dans AR 053782 A1 au nom de Pierobon par exemple. Ceci permet de préserver le voile de roue, lequel peut rester creux, au moins en partie.

L'utilisation d'une couronne rigide améliore sensiblement le nettoyage des disques du semoir. Cette utilisation induit cependant une difficulté : comme la portion de la jante comprise entre la couronne racleuse et le bandage contacte le sol, la terre tend à s'y accumuler également, en sorte qu'il faut prévoir une étanchéité entre le bandage et la jante, au moins à proximité de la couronne. À cela s'ajoute la terre éventuellement décollée des disques, qui, du fait d'une allure généralement tronconique de la jante au voisinage de la couronne, se retrouve elle aussi sur la portion de jante en question.

À cet effet, AR 053782 A1 utilise un bandage dont l'enveloppe est dépourvue de flanc du côté de ce bandage orienté vers la couronne. La bande de roulement se raccorde directement au fourreau. Là, le bandage présente une lèvre annulaire qui fait saillie axialement en direction de la couronne. Cette lèvre repose sur la portion tronconique de la jante, portion qui supporte la couronne. D'une certaine manière, AR 053782 A1 détourne l'usage classique d'une telle lèvre, d'une fonction de racloir à celle d'étanchéité.

La demanderesse a identifié certains inconvénients à la roue selon AR 053782 A1.

La lèvre est très exposée et demeure statique même lorsque la roue travaille, ce qui la fragilise considérablement. Cette lèvre se détériore prématurément, plus rapidement que ne s'use le reste du bandage.

La lèvre tend en outre à se soulever de la jante lorsque le bandage se déforme. L'interface entre cette lèvre et la jante s'ouvre lorsque la roue travaille, et la terre tend à s'y introduire. L'étanchéité perd son efficacité.

Pour pallier ces inconvénients, on peut utiliser des élastomères plus durs, qui rendent le bandage plus rigide dans son ensemble, et en particulier sa lèvre annulaire. Il en résulte cependant un bandage qui ne se nettoie plus, ou moins bien, car la capacité de déformation de l'enveloppe est moindre.

L'invention vise à améliorer la situation.

On propose une roue agricole formant accessoire d'un disque de semoir. Cette roue comprend un corps comprenant une jante d'allure généralement de révolution autour d'un axe central et un bandage de type semi-creux comprenant une enveloppe souple autour d'une chambre creuse, cette enveloppe souple comprenant un fourreau et une bande de roulement. Cette bande de roulement présente un profil bombé vers l'extérieur du bandage. La jante comprend une section axiale conformée en un siège, propre à recevoir le bandage, et une section axiale conformée en un outil, propre à racler le disque de semoir. L'enveloppe comporte au moins un premier flanc, proche de la section d'outil, reliant le fourreau à la bande de roulement, ce premier flanc s'étendant généralement de manière radiale ou faiblement inclinée radialement. La jante comprend une section axiale intermédiaire qui raccorde la section d'outil à la section de siège. Cette section intermédiaire est conformée en une butée axiale pour le bandage en correspondance de forme avec le premier flanc. Le bandage étant monté sur la section de siège par l'intermédiaire du fourreau dans un état axialement contraint qui maintient le premier flanc en contact contre la butée.

Dans cette roue, une étanchéité entre la jante et le bandage est créée en la section de butée, par une mise en contact surfacique du premier flanc et de cette section. Ce contact se fait sous pression du fait que le bandage est monté sur le siège dans un état de contrainte latérale.

Ce contact est créé dès le montage du bandage sur le siège. En travail, du fait de sa forme bombée, la bande de roulement reporte l'effort de réaction du sol, généralement dirigé radialement, au moins sur le premier flanc, d'une manière qui tend à le déformer axialement, vers la section de butée. Ceci augmente la pression de contact entre la section de butée et le premier flanc. L'étanchéité se trouve plus efficace lorsque la roue travaille.

Le bandage peut être réalisé avec une enveloppe souple, puisque la déformation de cette enveloppe contribue à l'efficacité de l'étanchéité. Dès lors, on peut conserver un bandage à forte capacité de déformation, ce qui est bénéfique pour le nettoyage du bandage.

Des caractéristiques optionnelles de l'invention, complémentaires ou de substitution sont énoncés ci-après.

La butée axiale et le premier flanc présentent chacun un profil rectiligne.

L'enveloppe souple comprend une ou plusieurs portions qui font saillie radialement du fourreau ou de la bande roulement dans la chambre creuse, ces portions étant conformée en au moins une butée radiale pour la bande de roulement.

L'une au moins de ces portions en saillie dépasse du fourreau ou de la bande de roulement d'une hauteur voisine, par valeurs supérieures, à la hauteur du premier flanc.

Deux au moins des portions en saillie en regard l'une de l'autre dépassent respectivement du fourreau et de la bande de roulement et d'une hauteur cumulée voisine, par valeurs supérieures, à la hauteur du premier flanc.

La bande de roulement présente une portion formant sommet et l'enveloppe présente un plan médian, et la portion formant sommet est déportée du plan médian, dans une direction qui l'éloigne du premier flanc.

La section d'outil comprend deux sections axiales généralement tronconiques d'un bord axial de la jante à la butée axiale, et celle de ces sections qui est la plus proche dudit bord axial est plus inclinée que l'autre relativement à une direction radiale.

Le corps de roue comprend un premier flasque et un second flasque montés l'un sur l'autre, et le premier flasque comprend au moins la section d'outil et la section de butée axiale, et le second flasque comprend une partie au moins de la section de siège.

Le premier flasque comprend en outre au moins une partie de la section de siège et le second flasque comprend le reste de la section de siège.

L'enveloppe souple comporte un second flanc, éloigné de la section d'outil, reliant le fourreau à la bande de roulement.

Le second flanc s'étend généralement de manière radiale ou faiblement inclinée radialement.

Le second flanc est en partie au moins sensiblement plus épais que le premier flanc.

Le bandage présente une rainure annulaire, ménagée dans le second flanc, et la jante présente un bord recourbé, engagé dans la rainure annulaire.

La section de siège comprend au moins une section généralement tronconique qui s'évase en direction de la section d'outil.

Le corps comprend un premier flasque et un second flasque montés l'un sur l'autre, le premier flasque comportant au moins la section d'outil, la section de butée axiale et au moins une section généralement tronconique de la section de siège.

Le bandage comprend un bourrelet annulaire qui dépasse de l'enveloppe souple là où le premier flanc se raccorde à la bande de roulement.

D'autre caractéristiques et avantages de l'invention apparaitront à la lecture de la description détaillée ci-après, faite en relation avec les dessins, sur lesquels :
- [Fig. 1] représente un module de semoir, vu de face ;
- [Fig. 2] représente le module de la figure 1, vu de gauche ;
- [Fig. 3] représente le module de la figure 1, vu de derrière ;
- [Fig. 4] représente le module de la figure 1, vu en perspective isométrique ;
- [Fig. 5] représente une roue accessoire selon un premier mode de réalisation, vue de face ;
- [Fig. 6] représente la roue de la figure 5, en coupe selon une ligne VI-VI ;
- [Fig. 7] représente la roue des figures 5 et 6, en perspective isométrique ;
- [Fig. 8] représente la roue des figures 5 à 7 éclatée ;
- [Fig. 9] représente un détail IX de la figure 6 ;
- [Fig. 10] représente un détail X de la figure 9 ;
- [Fig. 11] est homologue de la figure 6 pour une variante du premier mode de réalisation ;
- [Fig. 12] représente un détail XII de la figure 11 ;
- [Fig. 13] représente un détail XIII de la figure 12 ;
- [Fig. 14] est homologue de la figure 6 pour une autre variante du premier mode de réalisation ;
- [Fig. 15] représente un détail XV de la figure 14 ;
- [Fig. 16] représente un détail XVI de la figure 15 ;
- [Fig. 17] est homologue de la figure 6 pour un second mode de réalisation de la roue accessoire ;
- [Fig. 18] représente un détail XVIII de la figure 17 ;
- [Fig. 19] est homologue de la figure 6 pour une variante du second mode de réalisation ;
- [Fig. 20] représente un détail XX de la figure 19 ;

Les dessins et la description ci-après contiennent pour l'essentiel des éléments de caractère certain. Ils pourront donc non seulement servir à mieux faire comprendre la présente invention, mais aussi contribuer à sa définition, le cas échéant.

On appelle ici *"corps de roue"* (*"body"* ou *"wheel body"* en anglais) la partie pratiquement indéformable d'une roue, par opposition à sa partie essentiellement déformable que constitue le bandage, ou le pneumatique. On appelle *"jante"* (*"rim"* ou *"wheel rim"* en anglais) la portion périphérique du corps de roue destinée notamment à supporter le bandage ou le pneumatique. Le reste du corps de roue peut être appelé *"voile" (̅"dise", "wheel dise", "dish",* ou encore *"wheel dish"* en anglais). Le corps de roue est ainsi constitué de la jante et du voile.

Contrairement à l'usage que l'on en fait parfois, le terme *"jante"* ne désigne pas ici l'intégralité du corps de roue.

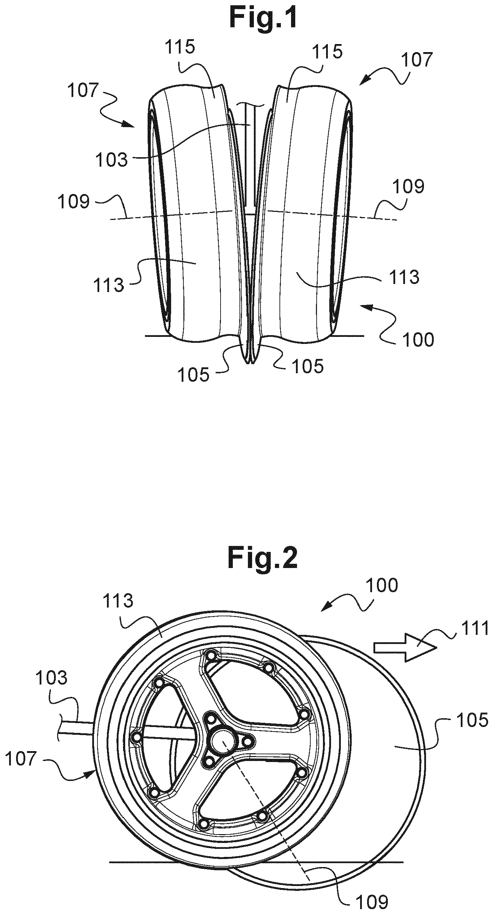

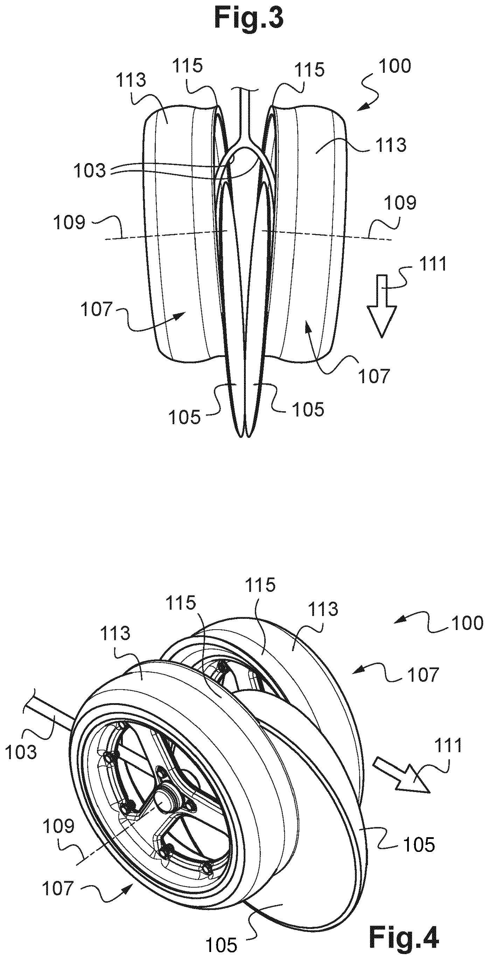

On fait référence aux figures 1 à 4.

Un ensemble de semoir 100 comprend une paire d'outils rotatifs 101 analogues, montée de manière symétrique par rapport à un plan vertical sur un a²&aéa8 e5t+zr+8 support. Chaque outil 101 comprend un disque semoir 105 respectif, monté libre à rotation sur le châssis d'une machine ou d'un outil tracté/poussé par une telle machine, et une roue accessoire 107 respective, montée de manière libre à rotation autour d'un axe 109, sur un bras 103 qui relie la roue 107 au châssis en question. Le disque 105 et la roue 107 d'un outil 101 respectif sont libres de tourner l'un par rapport à l'autre.

Le bras 103, du moins une portion de celui-ci voisine de la roue 107, se trouve intercalé entre le disque 105 et la roue 107.

Dans chaque outil 101, l'axe de rotation 109 de la roue 107 par rapport au bras 103 se trouve excentré de l'axe de rotation du disque semoir 105. Cette excentration comprend une composante verticale non nulle de sorte que l'axe de rotation du disque 105 relativement au bras 103 se trouve plus bas que celui de la roue 107. L'excentration en question comprend en outre une composante horizontale non nulle de sorte que l'axe de rotation du disque 105 relativement au bras 105 se trouve à l'avant de celui de la roue 107, en référence à une direction d'avance 111 de l'ensemble 100.

Pour son montage, le disque 105 de chaque outil 101 comprend un moyeu (non représenté) équipé d'un ou plusieurs paliers, de type roulement notamment. Ce moyeu fait saillie du disque 105, au moins depuis une face de ce disque 105 orientée vers la roue 107 de l'outil 101. Ce moyeu se trouve en partie au moins dans un espace de la roue 107 compris entre deux grandes faces latérales de celle-ci.

Chaque roue 107 comprend un corps (non référencé) avec une portion centrale formant un moyeu et une portion périphérique formant une jante. La jante est équipée d'un bandage semi-creux 113, réalisé sous la forme d'une enveloppe déformable. Cette enveloppe comprend une portion formant une bande de roulement par l'intermédiaire de laquelle la roue 107 repose sur le sol. Le bandage 5 est réalisé en un matériau souple du genre caoutchouc ou élastomère.

Dans un bandage semi-creux, l'enveloppe délimite un espace vide de matière, à la manière d'une chambre, maintenu en communication fluidique avec l'extérieur, le plus souvent au moyen d'un ou plusieurs trous à travers l'enveloppe. La pression d'air à l'intérieur de la chambre tend à correspondre à la pression atmosphérique. Pour cette raison, un bandage semi-creux peut être aussi qualifié de non gonflable et/ou non gonflé. Au terme *"bandage",* on préfère parfois celui de *"pneumatique"* du fait qu'un bandage semi-creux présente un profil qui peut ressembler à ce que l'on appelle classiquement un *"pneumatique",* c'est-à-dire un *"bandage pneumatique"* pour parler correctement.

Les disques 105 de l'ensemble 100 sont montés sur le bras 103 de manière inclinée par rapport à un plan vertical, avec un premier pincement angulaire, et au plan de symétrie, avec un second pincement angulaire. Ces disques 105 se rapprochent l'un de l'autre selon la direction d'avance 111 d'une part et selon une direction verticalement vers le bas, d'autre part. L'ensemble 100 présente une configuration dite en "V" relativement à la direction verticale et à la direction d'avance 111. Le premier angle de pincement et/ou le second angle de pincement sont par exemple voisins de 5°. Le premier angle de pincement peut différer du second.

Les roues 107 sont orientées de manière analogue aux disques 105. Les angles de pincement des roues 107, premier et second, peuvent différer de ceux des disques 105.

Lorsque l'ensemble 100 travaille, les disques 105 pénètrent le sol de façon à y créer un sillon, destiné par exemple à l'enfouissement de graines ou de semences, tandis que l'ensemble 100 repose sur le sol par l'intermédiaire des roues 107, en particulier la bande de roulement du bandage 113. La profondeur de travail des disques 105 est fixée grâce aux roues 107 et correspond au décalage vertical de l'axe de rotation 109 des roues 107 relativement à celui des disques 105, c'est-à-dire à la composante verticale de l'excentration de ces axes. Les disques 105 peuvent ainsi travailler le sol à une profondeur sensiblement constante, même lorsqu'un champ présente des dénivelés.

Le bandage 113 présente une lèvre annulaire 115, qui fait saillie du reste de l'enveloppe radialement et axialement vers l'extérieur du bandage 113 et de la jante du corps de roue.

Lorsque l'ensemble 100 avance, la lèvre 115 de chaque roue 107 vient frotter contre la face proximale d'un disque 105 voisin en la raclant. Ce raclage a pour effet de nettoyer les disques 105 de ce qui pourrait y avoir adhéré, comme de la boue ou des débris par exemple.

Le bandage 113 des figures 1 à 4 est de type connu, par exemple de FR 3 017 265 A1 au nom de la Demanderesse. D'autres formes de bandage creux à lèvres sont connues, en particulier de FR 2 885 008 A1.

Pour certaines applications, par exemple lorsque le sol est composé de terres argileuses et/ou collantes, une lèvre du type de la lèvre annulaire 115, en matériau souple, peut ne pas donner pleinement satisfaction. L'effet nettoyant produit par une telle lèvre peut se révéler insuffisant.

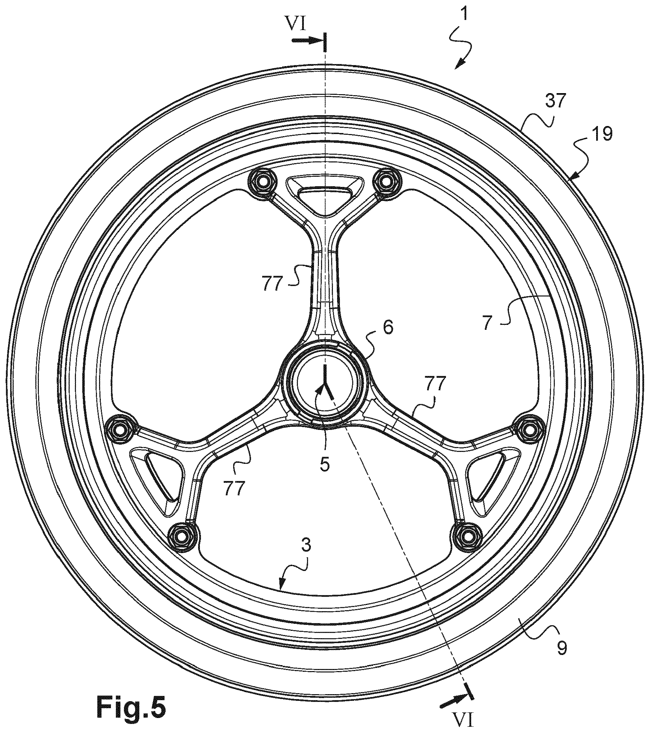

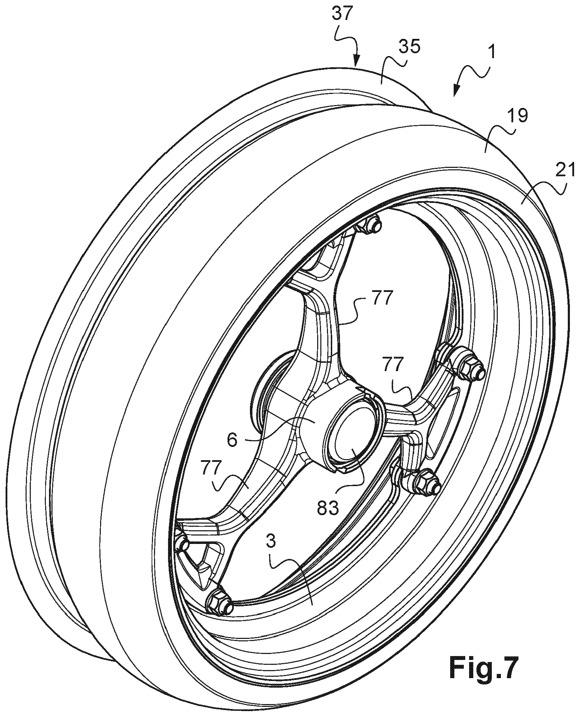

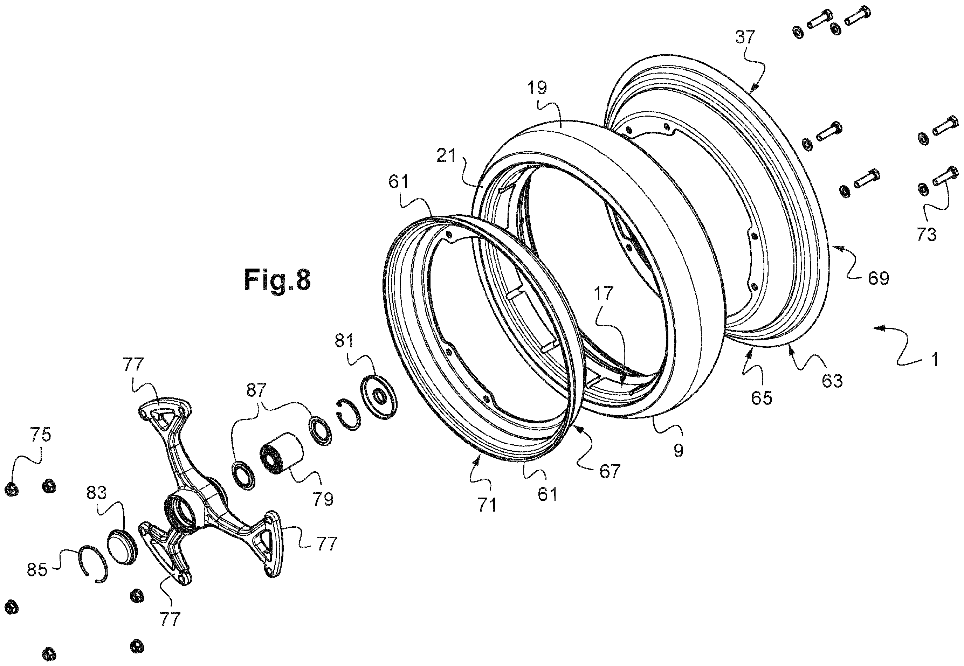

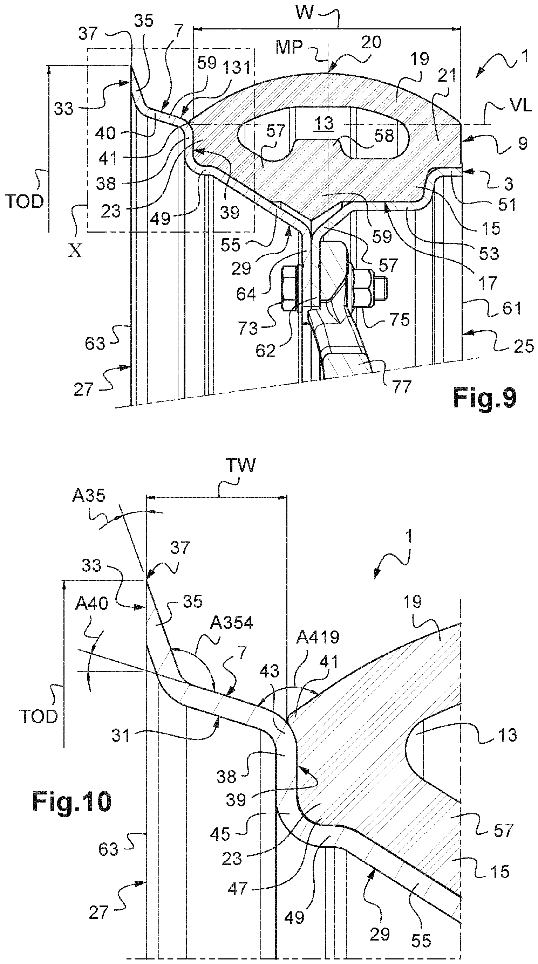

On fait référence aux figures 5 à 10.

Ces figures montrent une roue 1 d'un type nouveau, propre à remplacer la roue accessoire 107 dans l'ensemble 100 décrit en relation avec les figures 1 à 4.

La roue 1 comprend un corps de roue 3 d'allure générale de révolution, autour d'un axe central qui coïncide avec un axe central 5 de la roue 1. Le corps 3 comprend une partie centrale conformée en un moyeu 6 et une portion périphérique conformée en une jante 7. La roue 1 est équipée d'un bandage 9 de type semi-creux, qui vient s'adapter autour de la jante 7. Le bandage 9 comprend une enveloppe souple d'allure généralement torique dont un axe central coïncide avec l'axe central 5 de la roue 1 lorsque le bandage 9 est monté sur le corps 3. L'enveloppe du bandage 9 délimite une chambre 13. Cette chambre 13 est creuse et non gonflable, typiquement du fait qu'un ou plusieurs trous traversent l'enveloppe du bandage 9 (non représentés).

Le bandage 9 est réalisé en un matériau souple, de type élastomère, de préférence en caoutchouc naturel ou synthétique, éventuellement mélangés l'un à l'autre. Ce matériau a de préférence une dureté Shore comprise entre 50 et 70. L'enveloppe présente une capacité importante à se déformer et reprendre sa forme initiale, du fait de la combinaison d'un matériau souple et d'un espace intérieur creux, tel que la chambre 13, en communication fluidique avec l'extérieur. L'enveloppe se déforme notamment lorsque la roue 1 travaille, sollicitée par un effort de réaction du sol. Cet effort s'exerce principalement radialement vers l'axe central 5 de la roue 1.

Le bandage 9 comporte un fourreau intérieur 15 généralement tubulaire, conformé de manière à s'adapter étroitement sur la surface extérieure de la jante 7, au moins sur une portion axiale de celle-ci. La partie du bandage 9 correspondant au fourreau 15 est parfois appelée *"semelle".* Le fourreau 15 correspond à la partie radialement interne du bandage 9.

Le fourreau 15 porte une face intérieure 17 du bandage 9. Cette face intérieure 17 est généralement orientée de manière sensiblement radiale vers l'axe central du bandage 9. Pour l'essentiel, la face intérieure 17 comprend des surfaces orientées de manière sensiblement radiale vers l'axe central du bandage 9 ou dont l'orientation comprend une composante radiale orientée vers cet axe.

Le bandage 9 comporte en outre une portion de l'enveloppe radialement opposée au fourreau 15 et qui forme une bande de roulement 19. La bande 19 correspond à une face radialement extérieure du bandage 9, c'est-à-dire essentiellement orientée radialement à l'opposé de l'axe central du bandage 9.

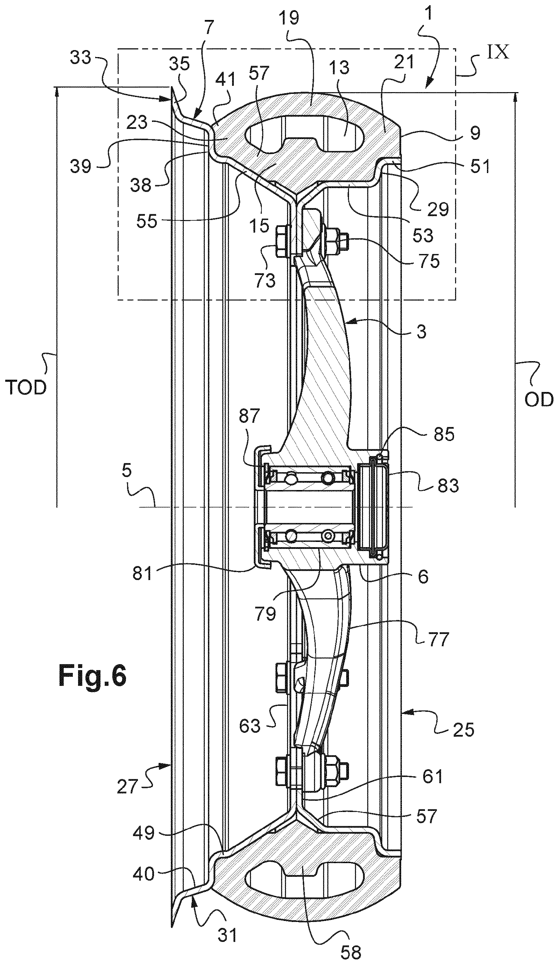

La bande 19 est reliée au fourreau 15 par deux portions de l'enveloppe axialement opposées l'une à l'autre et qui forment des flancs du bandage 9 : un flanc extérieur 21, à droite de la chambre 13 sur la figure 6, et un flanc intérieur 23, à gauche.

Le flanc extérieur 21 et le flanc intérieur 23 s'étendent généralement selon la direction radiale du bandage 9. En variante, l'un au moins du flanc extérieur 21 et du flanc intérieur 23 s'étend généralement selon une direction faiblement inclinée par rapport à la direction radiale, de l'ordre quelques degrés et de 15 degrés au plus.

Cette inclinaison peut être positive, lorsque le flanc s'écarte de la direction radiale axialement vers l'extérieur du bandage 9 à mesure qu'il s'éloigne de l'axe du bandage 9, ou négative, lorsque cet écartement se fait en direction axialement vers l'intérieur du bandage 9.

Pour le flanc intérieur 23 au moins, on privilégie une inclinaison négative par rapport à la direction radiale à une inclinaison positive, en ce qu'une inclinaison négative s'accompagne d'une étanchéité plus efficace et préserve le flanc intérieur 23 de fragilisation.

La bande 19 présente un profil généralement bombé vers l'extérieur du bandage 9 (convexe), de manière continue du flanc extérieur 21 au flanc intérieur 23. Ce profil présente une portion formant sommet 20, dont la distance à l'axe central du bandage 9 correspond à un demi diamètre extérieur OD de ce bandage 9. Ici par exemple, le diamètre OD est voisin de 405 millimètres. Ce sommet 20 est situé ici dans un plan médian MP du bandage 9, ou à proximité de celui-ci. Le plan MP du bandage 9 est perpendiculaire à l'axe central de ce bandage 9 et se trouve axialement à égale distance du flanc extérieur 21 et du flanc intérieur 23. L'écartement entre ces flancs, i.e. la distance qui sépare leur surface extérieure respective dans la direction axiale, correspond à une largeur W du bandage 9.

Lorsqu'un effort s'exerce sur la bande 19 essentiellement dirigé radialement vers l'axe central de ce bandage 9, l'enveloppe du bandage 9 tend à se déformer d'une manière telle que le flanc extérieur 21 et le flanc intérieur 23 sont chacun sollicités axialement vers l'extérieur du bandage 9. Un tel effort résulte typiquement de la réaction du sol lorsque la roue 1 travaille. La forme bombée de la bande 19 fait porter l'effort exercé sur cette bande 19 sur le flanc extérieur 21 et le flanc intérieur 23 avec une résultante axiale. Le flanc extérieur 21 et le flanc intérieur 23 sont sollicités de manière à peu près analogue l'un de l'autre du fait de la symétrie de la bande 19.

Ici, le flanc extérieur 21 est sensiblement plus épais que le flanc intérieur 23. Ceci permet d'augmenter la résistance du flanc extérieur 21, en particulier à l'usure, relativement au flanc intérieur 23. En travail, le flanc extérieur 21 est plus exposé que le flanc intérieur 23. En outre, cette roue 1 est destinée à travailler avec un angle de travers relativement à la direction d'avance, angle qui expose le flanc extérieur 21. Cette surépaisseur peut atteindre 20 pour cent.

Par exemple, une épaisseur du flanc intérieur 23 peut être comprise entre 8 et 12 millimètres tandis que l'épaisseur du flanc externe 21 peut être comprise entre 8 et 15 millimètres.

Le flanc extérieur 21 et le flanc intérieur 23 présentent des diamètres extérieurs voisins l'un de l'autre.

Le corps 3 présente une première grande face, ou face avant 25, à droite sur la figure 6, et une seconde grande face, ou face arrière 27, à gauche, opposée à la face avant 25.

La roue 1 est destinée à être montée dans un outil agricole, par exemple du type de l'ensemble 100 décrit en relation avec les figures 1 à 4, de manière telle que la face arrière 27 du corps 3 se trouve en partie au moins en regard d'un outil en forme de disque, comme le disque 105 des figures 1 à 4 par exemple. La face avant 25 du corps 3 se trouve alors orientée de manière opposée à ce disque. Cette face avant 25 du corps 3 se trouve dirigée vers l'extérieur d'un ensemble du type de l'ensemble 100 des figures 1 à 4, la face arrière 27 vers l'intérieur.

La jante 7 comprend une première section axiale conformée en un siège 29 adapté au fourreau 15, du moins à la portion de ce fourreau 15 qui correspond à la face intérieure 17 du bandage 9. Ce siège 29 présente une forme qui correspond essentiellement à la face intérieure 17 du bandage 9. Le bandage 9 est maintenu sur la jante 7 par l'intermédiaire d'un appui de sa face interne 17 contre le siège 29, sur l'essentiel de l'étendue axiale de cette face 17.

Le siège 29 est généralement orienté de manière sensiblement radiale vers l'extérieur du corps 3, ou son orientation comprend une composante radiale orientée vers l'extérieur du corps 3, le cas échéant par portions selon direction axiale du corps 3. Le siège 29 comporte majoritairement des surfaces orientées de manière sensiblement radiale vers l'extérieur du corps 3, ou dont l'orientation comprend une composante radiale orientée vers l'extérieur du corps 3. Lorsque le bandage 9 est monté sur le corps 3, sa face intérieure 17 se trouve en contact, pour sa plus grande partie du moins, avec le siège 29. Ici, le siège 29 se termine axialement sur la face avant 25 du corps 3. Le siège 29 reçoit la portion radialement intérieure du bandage 9, qui s'étend du flanc intérieur 23 au flanc extérieur 21.

La jante 7 comprend en outre une seconde section axiale conformée en un outil racleur 31 et qui s'étend axialement depuis la face arrière 27 du corps 3. L'outil racleur 31 comprend une surface terminale 33 en forme de couronne, qui s'étend radialement et par l'intermédiaire de laquelle l'outil 31 est destiné à frotter contre le disque d'un semoir, typiquement le disque 105 décrit en relation avec les figures 1 à 4. Cette surface terminale 33 est portée par une section de l'outil 31 conformée en un rebord de la jante 7, ou rebord interne 35. Le rebord interne 35 est généralement tronconique et s'évase radialement, en direction de la surface terminale 33.

Le rebord interne 35 se termine en une arête vive 37, qui forme le bord extérieur de la couronne 33. L'arête 37 est destinée à racler la surface d'un disque semoir, par exemple du type du disque 105 des figures 1 à 4. La surface terminale 33 peut être vue comme une surface de dépouille relative à l'arête 37. Une surface radialement extérieure du rebord interne 35 peut être vue comme une surface de raclement, dans la mesure où la terre qui se trouve décollée du disque par l'action de l'arête 37 tend à suivre cette surface du rebord interne 35.

La distance de l'arête 37 à l'axe 5 selon la direction radiale du corps 3 correspond à la moitié du diamètre extérieur TOD de l'outil 31. Par exemple, le diamètre TOD peut atteindre 410 millimètres.

La distance qui sépare, selon la direction axiale du corps 3, la couronne 33 d'une extrémité éloignée de la section supplémentaire 40 correspond à une largeur TW de l'outil 31. Par exemple, la largeur TW peut atteindre 20 millimètres environ.

Tel que représenté sur les figures, le rebord interne 35 est incliné d'un angle A35 d'environ 20 degrés relativement à la direction radiale du corps 3. D'autres valeurs d'inclinaison peuvent être envisagées. Une inclinaison comprise entre 10 et 45 degrés est bénéfique à l'évacuation de la terre, ou analogue, détachée du disque avec lequel la roue 1 coopère.

La jante 7 comprend en outre une section axiale intercalaire 38, qui relie la section portant le siège 29 à celle formant l'outil 31. Cette section intercalaire 38 est conformée de manière à porter une surface d'appui 39 adaptée au flanc intérieur 23 du bandage 9. Cette surface d'appui 39 forme une butée axiale sur le corps 3 contre laquelle est monté le bandage 9. La surface d'appui 39 est conformée en correspondance de forme avec le flanc intérieur 23, du moins la surface extérieure de celui-ci. Cette surface d'appui 39 coopère avec le flanc intérieur 23 sur toute l'étendue de ce dernier. L'étendue radiale de la surface d'appui 39 et celle du flanc intérieur 23 sont voisines l'une de l'autre. La surface d'appui 39 ne dépasse pas radialement du flanc intérieur 23. Ce flanc intérieur 23 ne dépasse pas radialement de la surface d'appui 39. La surface d'appui 39 s'étend sur l'ensemble de la section intercalaire 38 de la jante 7. On obtient ainsi une coopération optimale entre la surface d'appui 39 et le flanc intérieur 23.

La surface d'appui 39 pourrait s'étendre radialement vers l'extérieur du corps 3 au-delà du flanc intérieur 23. Toutefois, il en résulterait une zone entre la jante 7 et le bandage 9 où ce dernier serait peu susceptible de déformation et où, en conséquence, des débris ou de la terre pourrait s'accumuler. Avec une surface d'appui 39 et un flanc intérieur 23 de hauteurs voisines, on évite toute accumulation de terre ou analogue à la jonction de l'outil 31 à la bande 19 du bandage 9.

On obtient un raccordement entre l'outil 31 et le bandage 9 largement ouvert sur l'extérieur et plutôt fluide dans sa forme. Ceci évite l'encrassement de ce raccordement et réduit l'impact de la roue 1 sur le champ, à proximité du sillon.

La surface d'appui 39 commence radialement là où le fourreau 15 se raccorde au flanc intérieur 23. La surface d'appui 39 se termine radialement là où ce flanc intérieur 23 se raccorde à la bande de roulement 19.

L'outil 31 comprend en outre une section axiale de la jante 7 qui raccorde le rebord 35 à la section intermédiaire 38, ou section supplémentaire 40. Cette section supplémentaire 40 est généralement tronconique. L'inclinaison de la section supplémentaire 40 relativement à la direction radialement à l'opposé de l'axe 5 est très supérieure à celle du rebord 35.

L'inclinaison de la section supplémentaire 40 est repérée par l'angle A40 que fait cette section supplémentaire 40 avec la direction axiale. Cette inclinaison permet d'éviter l'accumulation de terre sur l'outil 31.

Une section supplémentaire 40 tronconique tend à mieux se nettoyer qu'une section cylindrique. Une inclinaison de cette section supplémentaire 40 supérieure à celle du rebord 35 est bénéfique. Une telle inclinaison procure à la région de la roue 1 comprise entre le rebord 35 et la bande 19 une configuration ouverte radialement vers l'extérieur (concave). Une telle ouverture contrecarre l'accumulation de terre dans cette région. L'angle A40 est compris entre 10 et 45 degrés est ici préférée. Une telle inclinaison offre d'une part une nette rupture de profil entre le rebord 35 et la section intermédiaire 40 et une fluidité du profil de la région regroupant la bande 19 et cette section intermédiaire 40. Ici, cette inclinaison est voisine de 30 degrés.

Le rebord 35 et la section supplémentaire 40 forment entre elles un angle A354 supérieur à 90 degrés. Ici, l'angle A354 entre l'extension du rebord 35 et celle de la section supplémentaire 40 est compris entre 100 et 120 degrés. Un tel angle favorise l'évacuation de la terre décollée du disque.

Cette association, dans l'outil 31, de deux sections tronconiques d'inclinaisons différentes améliore les performances de la roue 1. Elle permet de dissocier, dans l'outil 31, la portion impliquée dans le raclement du disque et la portion en contact avec le sol. Cette association augmente la rigidité de l'outil 31 et par conséquent son efficacité. Une configuration de l'outil 31 en une seule surface tronconique n'est cependant pas exclue. Cette configuration résulterait, toutes choses égales par ailleurs, en une inclinaison supérieure du rebord 35 relativement à la direction radiale. Une configuration de l'outil 31 en trois surfaces tronconiques ou plus complexifie sa fabrication et tend à créer un profil étagé moins efficace pour l'évacuation de la terre et plus dommageable pour le sol. Surtout, un tel profil s'accompagne d'un encombrement axial de l'outil 31 qui le rend peu pratique. Le rebord 35 et la section supplémentaire 40 présentent ici un profil rectiligne. Sans se départir d'une allure générale tronconique, le rebord 35 et la section supplémentaire 40 pourraient présenter un profil légèrement courbe, en particulier concave.

L'inclinaison de cette section supplémentaire 40, relativement à la direction axiale par exemple, peut être voisine de celle de la bande 19, au moins au voisinage du raccordement de cette bande 19 au flanc interne 23. Il s'agit de conférer ici à la partie correspondante de la roue 1 une allure de vallée qui est utile d'un point de vue agronomique. En effet, la partie en question est en contact avec le sol lorsque l'outil travaille. De préférence, l'angle A419 que forment entre elles la direction d'extension de la section supplémentaire 40 et la bande 19, au moins au voisinage du flanc interne 23 est supérieur à 100 degrés, tout en restant inférieur à 150 degrés.

La jante 7 est constituée d'une section axiale conformée en un outil 31, d'une section axiale conformée en un siège 29 pour le bandage 9 et d'une section axiale intercalaire 38 qui relie l'outil 31 au siège 29. Cette section intercalaire 38 forme une butée axiale 39 contre laquelle le bandage 9 s'appuie dès son montage. L'outil 31 est constitué d'une section axiale conformée en un rebord 35 et d'une section supplémentaire qui forme un angle ouvert sur l'extérieur de la roue 1.

Contrairement aux pneumatiques classiques, en particulier ceux décrits dans les publications précitées, le bandage 9 est dépourvu de lèvre, en particulier là où la bande 19 se raccorde au flanc interne 23. La bande 19 peut se raccorder au flanc intérieur 23 en une arête vive ou un arrondi, lesquels marquent une rupture dans les directions des surfaces extérieures de ces portions de l'enveloppe.

Ici, ce raccordement est conformé en un bourrelet 41. Ce bourrelet 41 est formé d'une légère inflexion de la courbure de la bande 19 au voisinage de l'extrémité de celle-ci qui se raccorde au flanc interne 23 et d'une portion dont le profil forme un léger arrondi à l'extrémité du flanc intérieur 23. Le bourrelet 41 dépasse sensiblement du reste de la surface extérieure du flanc intérieur 23 dont le profil est rectiligne et s'étend purement de façon radiale. Ce dépassement est très limité : de l'ordre de 5 millimètres au maximum.

La surface d'appui 39 se raccorde à l'outil 31 par une portion de la jante 7 conformée en un arrondi 43. La surface d'appui 39 se raccorde au siège 29 par une portion de jante 7 dont le profil forme un congé 45.

Le bandage 9 présente un bord arrondi 47 là où le fourreau 15 se raccorde au flanc intérieur 23. Ce bord arrondi 47 est agencé en correspondance de forme avec le congé 45 entre le siège 29 et la surface d'appui 39. L'arrondi du bourrelet 41 est en correspondance de forme avec l'arrondi 43 de la jante 7. Ceci améliore la coopération entre le flanc intérieur 23 et la section intercalaire 38 de la jante.

La surface d'appui 39 s'étend généralement selon une direction essentiellement radiale. La direction d'extension de cette surface d'appui 39 peut présenter une composante axiale. Toutefois, cette composante axiale demeure faible au regard de l'extension radiale de la surface d'appui 39. L'inclinaison de cette surface d'appui 39 relativement à la direction radiale est inférieure à 15 degrés environ.

La face intérieure 17 du bandage 9 est conformée de manière à s'appuyer contre des sections axiales de la jante 7 munies de surfaces formant des portées généralement cylindriques et centrées sur l'axe 5.

Ces portées cylindriques comprennent ici la surface extérieure d'une première section terminale du siège 29, proche de l'intérieur de la jante 7, ou bord interne 49 du siège 29, et la surface extérieure d'une seconde section terminale du siège 29 qui forme son bord externe 51 et celui de la jante 7. Les portées cylindriques comprennent également la surface extérieure d'une section intermédiaire 53 du siège 29, située du côté extérieur du corps 3. Ces portées coopèrent respectivement avec des surfaces de forme correspondante de la face intérieure 17 du bandage 9, situées respectivement au droit du flanc intérieur 23, du flanc extérieur 21 et d'une portion du fourreau 15 située du côté externe du plan MP.

Le bord interne 49 du siège 29 se raccorde à la section intercalaire 38. Le bord externe 51 de ce siège 29 aboutit sur la face avant 25 du corps 3. Des sections homologues au bord interne 49 et au bord externe 51 sont généralement désignées "bords de jante" dans un corps de roue classique, dépourvu de section analogue à l'outil 31.

Le fourreau 15 et la jante 7 sont ici conformés de manière à réaliser conjointement une portée généralement tronconique, qui s'évase en allant axialement vers la face intérieure de la roue 1. Cette portée tronconique correspond à une section tronconique 55 de la jante 7, section qui se raccorde à la section intercalaire 38. Cette section tronconique 55 se situe du côté de l'outil 31 relativement au plan MP. Cette portée tronconique contribue au blocage du bandage 9 contre la surface d'appui 39. Cette section tronconique 55 facilite en outre le montage du bandage 9 sur le corps 3, autour du siège 29. Cette section tronconique 55 facilite l'enfilement du fourreau 15 autour de cette partie de la jante 7, tandis que la surface d'appui 39 offre une butée lors de cet enfilement. Cette section tronconique 55 libère en outre un plus grand espace à l'intérieur du corps 3 (voile) que ne le ferait une portion de forme analogue à la section intermédiaire 53 par exemple. Cet espace est libéré là où le moyeu d'un disque de semoir fait généralement saillie, ou du moins à proximité.

La partie du siège 29 entre son bord interne 49 et son bord externe 51 comprend un fond de siège. Ce fond de siège comprend la section intermédiaire 53 d'un côté du plan MP et la section tronconique 55 de l'autre.

Le bord externe 51 du siège 29 et la section intermédiaire 53 de ce dernier se raccordent l'un à l'autre par l'intermédiaire d'une section de la jante 7, ou section de raccordement 57, qui s'étend sensiblement radialement ou d'une manière faiblement inclinée par rapport à cette direction radiale. Cette section de raccordement 57 offre une surface de butée lorsqu'on enfile le bandage 9 autour du corps 3. La section de raccordement 57 porte en outre une surface d'appui axial pour le bandage 9, supplémentaire à la surface d'appui 39. À la différence la surface d'appui 39, cette surface d'appui supplémentaire portée par la section de raccordement 57 intervient sur la partie du bandage 9 correspondant au fourreau 15. La section de raccordement relie le fond de siège 29 au bord externe 51 de ce siège.

La jante 7 est formée en une ou plusieurs pièces réalisées ici par emboutissage ou roulage d'une portion de tôle. La jante 7 présente une forme de révolution autour de l'axe 5, avec une allure généralement tubulaire et d'épaisseur sensiblement constante sur l'ensemble des sections axiales de la jante 7, du rebord interne 35 au bord externe 51.

Le bandage 9 est monté sur le corps 3 dans un état contraint axialement, entre la surface 39 et la surface de raccordement 57. Lorsque le bandage 9 n'est pas monté sur la jante 7, l'écartement de la surface du flanc intérieure 23 qui coopère avec la surface d'appui 39 de la jante 7 et de celle du fourreau 15 qui coopère avec la section de raccordement 57 dans la direction axiale est supérieur à l'écartement selon la direction axiale des surfaces de la jante 7 qui coopère avec elles. On applique une compression généralement comprise entre 2 et 5 pour cent de l'extension axiale du bandage 9. Par exemple, l'extension axiale du bandage 9 une fois monté sur le siège est inférieure de 2 à 3 millimètres pour un bandage 9 de l'ordre de 100 millimètres de large.

Une étanchéité est réalisée pour éviter que la terre décollée par l'outil 31 ou celle du sol où roule l'outil 31 ne s'intercale entre le siège 29 et le bandage 9 lorsque la roue 1 travaille. Cette étanchéité est réalisée entre l'outil 31 et le siège 29, exclusivement par la pression de l'appui du flanc intérieur 23 contre la surface d'appui 39. Cet appui est mis en place au montage du bandage 9, du fait de l'état axialement contraint de ce bandage 9. Cet appui est maintenu et augmenté lors du travail de la roue 1 du fait de la sollicitation axialement vers l'extérieur du flanc intérieur 23.

Le fourreau 15 présente une portion qui fait saillie radialement dans la chambre 13 en une butée 58 adaptée à la bande 19. Ici, cette butée 58 se trouve axialement au droit du sommet 20 de la bande 19. La hauteur de cette butée 58 est telle que l'écrasement de la bande 19 soit limité de manière à éviter une sollicitation radialement vers l'intérieur des flancs. La hauteur de la butée 58 est telle que la bande 19 ne puisse franchir une ligne virtuelle VL reliant les lieux de raccordement du flanc intérieur 23 et du flanc extérieur 21 à la bande 19 (fibre neutre). En variante, la butée 38 peut faire saillie de la bande 19 radialement vers l'axe 5. En variante encore, la butée 38 peut être réalisée en deux parties, l'une faisant saillie radialement de la bande 19, l'autre du fourreau 15. À course égale, une butée 38 en deux parties permet de réduire l'extension de chacune de ces parties et d'améliorer ainsi la fabrication du bandage 9, en particulier sa cuisson (vulcanisation).

La hauteur de la butée 58 est voisine, par valeurs supérieures, à la hauteur du flanc intérieur 23. Lorsque la butée 58 est réalisée en partie leur hauteur cumulée est voisine, par valeurs supérieures, de la hauteur du flanc intérieur 23.

Cette butée 38 trouve toute son utilité dans le mode de réalisation décrit ici, où l'épaisseur de l'enveloppe considérée et la dureté du matériau de celle-ci rendent cette enveloppe très déformable et nettoyante. Dans d'autres réalisation, un matériau plus dur, par exemple de dureté comprise entre 75 et 80 Shore, combiné à une épaisseur supérieure font que le bandage 9 ne se déforme presque pas en travail. Dans cette hypothèse, la butée 38 pouurait être omise.

La butée 58 s'étend sensiblement plus en direction du flanc intérieur 23 qu'en direction du flanc extérieur 21 afin de s'assurer de ce que le flanc intérieur 23 ne soit pas sollicité axialement vers l'intérieur en conséquence de la déformation de la bande 19.

La butée 58 agit en outre comme un raidisseur du fourreau 15 et contribue ainsi à maintenir le bandage 9 autour du siège 7. La butée 58 ceinture le fourreau 15 autour de la jante 7. Cela contribue en outre à prévenir tout déplacement du bandage 9 relativement au corps 3 selon la direction axiale.

Ici, le fourreau 15 présente une nervure circulaire 59 qui fait saillie de la face intérieure 17 du bandage 9. La nervure 59 se trouve sensiblement au droit de la butée 58, entre une portion du fourreau 15 qui se trouve contre la portée de la section tronconique 55 et la portée de la section intermédiaire 53. Cette nervure 59 rigidifie le fourreau 15 et contribue ainsi à maintenir la position axiale du bandage 9 relativement au siège 29.

Le siège 29 s'étend entre son bord interne 49 et son bord externe 51, ici supportant chacun une portée cylindrique. Entre le bord interne 49 et le bord externe 51, la jante 7 présente un profil général de cuvette. On appelle siège la section axiale continue de la jante 7 dont la surface extérieure porte une surface régulière en partie au moins en contact avec le fourreau 15 du bandage 9. La section tronconique 55 pourrait se raccorder directement à la section intercalaire 38 et le siège 29 dépourvu de portée cylindrique 49 au voisinage de cette section intercalaire 38.

Le corps 3 est ici formé d'un premier flasque, ou flasque externe 61, et d'un second flasque, ou flasque interne 63, montés l'un sur l'autre et maintenus ensemble fixement pour former le corps de roue 3.

Le flasque externe 61 et le flasque interne 63 présentent chacun une allure de révolution autour d'un axe central respectif. Ces axes centraux coïncident avec l'axe 5 lorsque le flasque externe 61 et le flasque interne 63 sont assemblés dans le corps 3.

Le flasque externe 61 présente une première grande face, ou face interne 65 par l'intermédiaire de laquelle le flasque externe s'appuie contre le flasque interne 63. Le flasque interne 63 présente une première grande face, ou face externe 67, par l'intermédiaire de laquelle le flasque interne vient en contact avec le flasque externe 61. Le flasque externe 61 et le flasque interne 63 présentent chacun une seconde grande face, respectivement face externe 69 et face interne 71, opposées à la face interne 65 du flasque externe 61 et la face externe 67 du flasque interne 63.

Le flasque externe 61 présente une portion périphérique qui relie sa face interne 65 à sa face externe 69. Le flasque interne 63 présente une portion périphérique qui relie sa face interne 71 à sa face externe 67. La portion périphérique du flasque externe 61 correspond à une portion axiale du siège 29, tandis que la portion périphérique du flasque interne 63 correspond à la section restante du siège 29, à l'outil 31 et la portion de jonction 39 entre le siège 29 et l'outil 31.

Le flasque externe 61 et le flasque interne 63 présentent chacun une partie centrale, qui se raccorde à leur portion périphérique respective. Ces parties centrales comprennent une surface en couronne, 62 pour le flasque externe 61 et 64 pour le flasque interne 63, par l'intermédiaire desquelles ces flasques sont en appui mutuel. Pour le reste, la partie centrale du flasque externe 61 et du flasque interne 63 est largement évidée. Le flasque externe 61 et le flasque interne 63 présentent chacun un voile essentiellement creux. Ce voile pourrait en variante être plein ou recevoir une pièce venant l'obturer.

Le flasque externe 61 et le flasque interne 63 sont fixés ici de manière réversible l'un à l'autre au moyen de fixations. Dans l'exemple décrit ici, ces fixations comprennent des couples vis 73 et écrou 75. Ces couples vis 73 et écrou 75 sont répartis par paires suivant la périphérie du corps de roue. En remplacement ou en supplément, d'autres moyens de fixation peuvent être utilisés, par exemples, des clips ou des rivets.

Le corps 3 comporte des bras 77, ici au nombre de trois, qui relient chacun le moyeu 6 à la jante 7. Les bras 77 et le moyeu 6 sont venus de matière. Les bras 77 et le moyeu 6 sont rapportés sur le flasque externe 61, ici au moyen des couples vis 73 et écrous 75.

Dans le mode de réalisation illustré, le corps 3 est constitué de trois pièces élémentaires : le flasque externe 61, le flasque interne 61 et l'ensemble formé des bras 77 et du moyeu 6. Cet ensemble peut être vu comme le voile de la roue 1.

Le moyeu 6 présente une forme générale de révolution. Ce moyeu 6 est propre à recevoir un essieu ou une fusée afin de supporter à rotation la roue 1, de manière folle, typiquement sur un bras du type du bras 102 décrit en relation avec les figures 1 à 4.

La roue 1 comprend un palier rotatif 79 logé dans le moyeu 6, ici sous la forme d'un roulement à deux rangées de billes. En variante, le palier 79 peut prendre la forme d'un ou plusieurs roulements de type différent ou d'un palier lisse.

Le moyeu 6 présente un alésage 80 propre à loger le palier 79. Le palier 79 s'y trouve maintenu axialement de manière classique, par exemple, d'un côté par une butée formée dans l'alésage 80 et un anneau élastique 81 de l'autre. L'alésage 80 est traversant. D'un côté, l'alésage 80 est en partie obturé pour une coupelle 82 en forme de couronne, capable de laisser passer l'axe ou le fuseau. De l'autre côté, l'alésage 80 est totalement fermé d'un bouchon 83, maintenu en place par un anneau élastique 85.

Dans les exemples décrits ici, le flasque interne 63 et le flasque externe 61 sont formés chacun d'une pièce monobloc respective.

L'encombrement, ou largeur, de la roue 1 est ici compris entre 110 et 114 millimètres, par exemple 112 millimètres. Cette largeur correspond à la somme de la largeur TW de l'outil 31 et de la largeur W du bandage 9. Ici, par exemple, la largeur W est voisine de 92 millimètres.

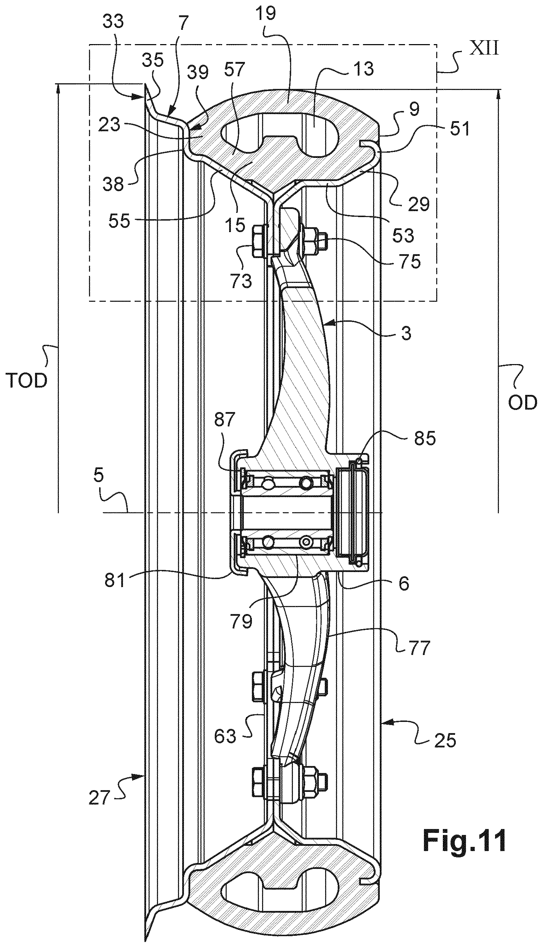

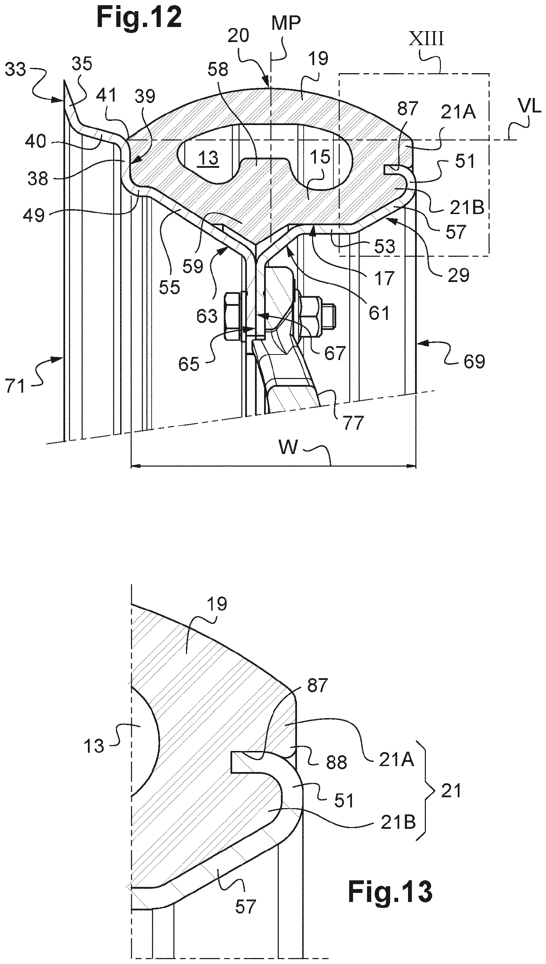

On fait référence aux figures 11 à 13.

La roue 1 s'y distingue de la roue 1 décrite en relation avec les figures 11 à 13 par la conformation de la section du siège 29 portée par le flasque externe 61 et celle du bandage 9 dans la portion du fourreau 15 qui repose sur cette section du siège 29.

Le bord externe 51 de la jante 7 est recourbé, radialement à l'opposé de l'axe 5 et axialement vers l'intérieur du corps 3, de manière à former une collerette. Au voisinage de son extrémité, le bord externe 51 de la jante 7 s'engage dans une rainure circulaire 87 ménagée dans le flanc externe 23 du bandage 9. La section de cette rainure 87 correspond à celle du bord externe 51 de la jante 7.

La rainure 87 sépare le flancs extérieur 21 en une portion radialement éloignée de l'axe 5, ou portion haute 21A, et une portion radialement proche de l'axe 5, ou portion basse 21B. La portion haute 21A du flanc extérieur 21 est conformée de manière analogue à sa portion homologue dans le bandage 9 des figures 5 à 10. La portion basse 21B du flanc extérieur 21 est conformée de manière complémentaire à la collerette du bord externe 51. Cette portion basse 21B est en appui par sa surface extérieure contre l'intérieur de la collerette.

La collerette formée comme un rebord de la jante 7 améliore le maintien du bandage 9 sur la jante 7, en particulier en position axiale et dans l'état contraint. Par réaction de l'enveloppe du bandage 9 à un effort de réaction du sol, la pression du contact entre le flanc interne 23 et la surface d'appui 39 se trouve augmentée. La collerette améliore l'étanchéité entre le bandage 9 et la surface d'appui 39. Au voisinage de l'ouverture de la rainure 87, le bandage 9 est conformé en un bourrelet 88 adapté pour s'appuyer contre une portion de la collerette du bord externe 51.

Entre la portée correspondant à la section intermédiaire 53 de la jante 7 et le bord externe 51 de la jante 7, le siège 29 présente ici une section de raccordement 57 tronconique. Cette forme tronconique améliore encore la sollicitation de l'enveloppe de manière à pousser les flancs intérieur 23 et extérieur 21 axialement vers l'extérieur du bandage 9. Cette forme facilite également le montage du bandage 9 sur le corps 3 autour de la jante 7. La face interne 17 du bandage 9 est conformée de manière correspondante pour assurer un contact bandage 9 contre jante 7 sur pratiquement l'ensemble du siège 29, à l'exception uniquement de la nervure circulaire 59.

Ici, comme dans la variante des figures 5 à 10, le fourreau 15 est en contact avec le siège 29 de la jante 7 sur l'ensemble de son étendue, à l'exception de la nervure 59.

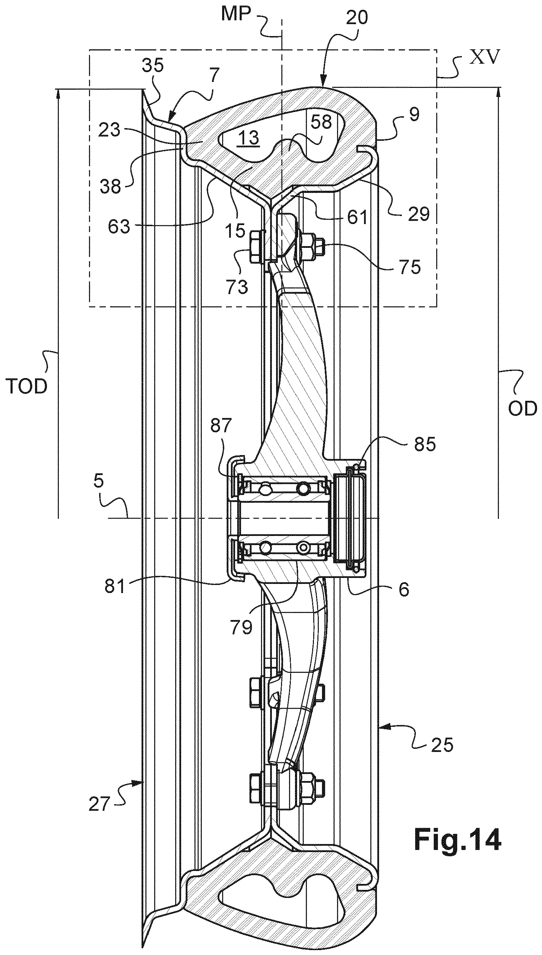

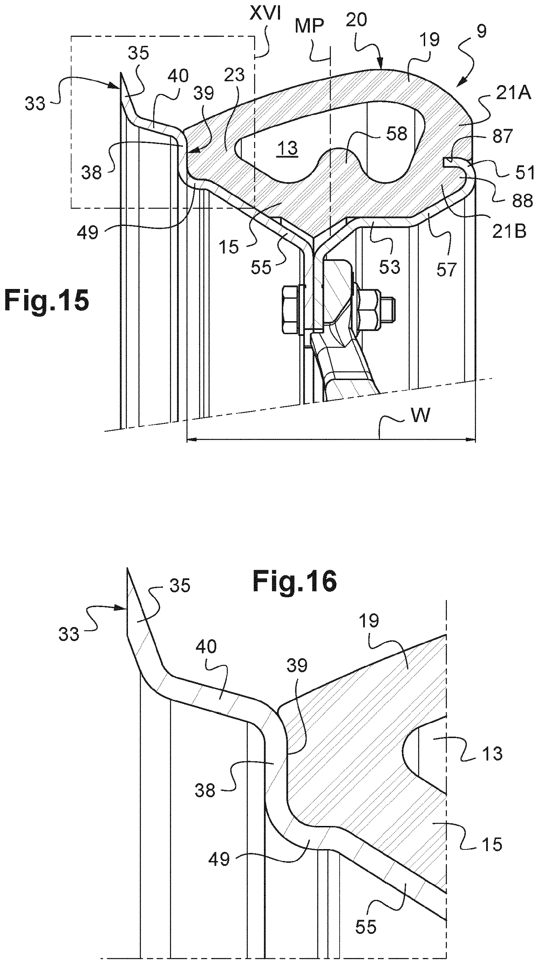

On fait référence aux figures 14 à 16.

Dans cette variante, la roue 1 se distingue de la roue 1 décrite en relation avec les figures 11 à 13 par la configuration du bandage 9.

Ici, le sommet 20 de la bande 19 est décalé du plan médian MP du bandage 9, axialement vers le flanc externe 23. Ce déport préserve la bande de terre comprise entre le sillon et le sommet 20. Il facilite la fermeture du sillon en évitant d'y tasser la terre. Ce sommet 20 se trouve sensiblement au niveau de la portion du fourreau 15 en appui contre la portée cylindrique de la section intermédiaire 53. La bande 19 présente une allure asymétrique du flanc interne 23 au flanc externe 21. Le diamètre OD du bandage 9 est supérieur à celui des modes de réalisation des figures 5 à 13, par exemple 412 millimètres. Le bandage 9 dépasse radialement de l'outil 31. La bande 19 se trouve moins inclinée que dans les réalisations précédentes par rapport à la direction axiale.

La butée 58 est également décalée axialement vers le flanc externe 21. Ce décalage est ajusté de manière à éviter qu'en travail la bande 9 ne franchisse la ligne virtuelle VL.

Le flanc extérieur 21 présente une épaisseur supérieure à celle de son homologue des figures 11 à 13. Cette surépaisseur provient d'un élargissement du flanc extérieur 21 vers la chambre 13, de manière régulière de la bande 19 au fourreau 15.

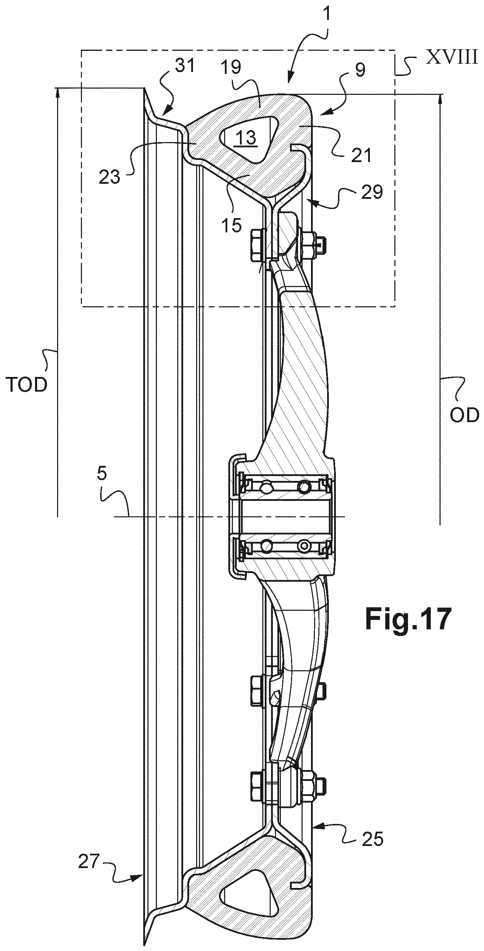

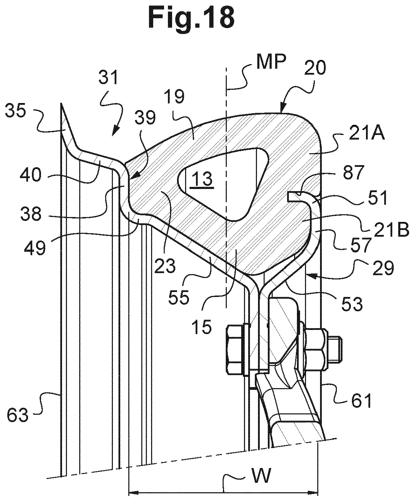

On fait référence aux figures 17 et 18.

Dans ce second mode de réalisation, la roue 1 est sensiblement plus étroite. Par exemple, la largeur W est ici comprise entre 40 et 60 millimètres, soit à peu près la moitié de la largueur W du premier mode de réalisation. La largeur de la roue est par exemple comprise entre 78 et 82 millimètres, typiquement 80 millimètres. Une roue de ce type trouve son intérêt dans un usage dans des semoirs à rangs rapprochés, connus dans la technique sous le terme de semoirs "twin row", ou à rangs jumeaux en français. Une roue de ce type est également utile dans le cas d'éléments de semoirs disposés plus proches les uns des autres que dans le cas des figures 1 à 4 notamment.

Le bord externe 51 de la jante 7 est recourbé comme dans le mode de réalisation des figures 11 à 16. La portion de raccordement 57 est plus étendue et coopère ici avec la portion basse 21B du flanc externe 21. Cette portion de raccordement 57 s'étend pratiquement radialement. La portion intermédiaire 53 est tronconique et se raccorde directement à la couronne 62 du flasque externe 61. La section axiale de la jante 7 correspondant à ce flasque externe 61 est dépourvue de portée cylindrique. Le sommet 20 de la bande 9 se trouve axialement au droit du flancs extérieur 23. Ce flanc extérieur 23 présente la même allure que sur les figures 14 à 16.

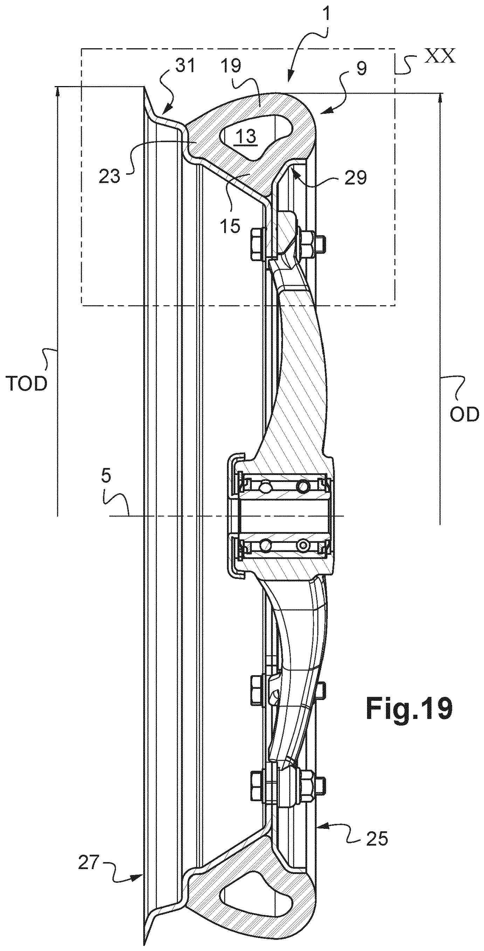

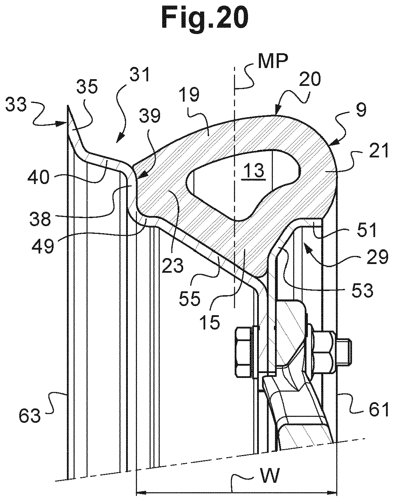

On fait référence aux figures 19 et 20.

Dans cette variante, le flanc extérieur 21 est généralement bombé vers l'extérieur du bandage 9. Cette forme bombée poursuit celle de la bande 19. On retrouve un bord externe 51 de la jante 7 conformée en une portée cylindrique. La section intermédiaire 53 est tronconique. Elle offre une surface s'étendant avec une composante axiale capable de bloquer axialement le bandage 9. La partie basse 21B du flanc extérieur 21 suit généralement cette forme de manière à présenter une épaisseur voisine de celle de sa partie haute 21A qui est bombée. La face intérieure 17 du bandage 9 est en correspondance de forme avec le siège. Cette butée axiale améliore la répartition de l'effort exercé sur le sommet 20. Cet effort est transmis au flanc interne 23 en outre à travers le flanc externe 21 et le fourreau 15. La largeur de la roue est par exemple comprise entre 80 et 84 millimètres, typiquement 82 millimètres

On vient de décrire un corps 3 à voile creux. Le corps 3 pourrait être à voile plein. En particulier, le corps 3 décrit ici peut être transformé en un corps à voile plein en remplaçant les bras 77 par une plaque de tôle.

On a décrit un flanc extérieur 21 et un flanc intérieur 23 qui s'étendent de manière analogue l'un de l'autre. Le flanc extérieur 21 et le flanc intérieur 23 pourraient s'étendre selon des inclinaisons différentes l'un de l'autre.

On a décrit une section intercalaire 38 portant une surface de butée axiale 39 en correspondance de forme avec le flanc interne 23 du bandage 9, du moins la surface extérieure de ce flanc 23. Sans se départir de leur complémentarité de forme, ni de leur extension généralement annulaire, le flanc interne 23 et la butée axiale 39, ou la section intercalaire 38, pourraient présenter un profil différent du profil rectiligne montré sur les figures 5 à 20. Par exemple, on peut prévoir des profils plus complexes, par exemple en forme de lobe ou ondulés.

## Revendications

1. Roue agricole (1) formant accessoire d'un disque de semoir (105), ladite roue (1) comprenant :
- un corps (3) comprenant une jante (7) d'allure généralement de révolution autour d'un axe central (5) ;
- un bandage (9) de type semi-creux comprenant une enveloppe souple autour d'une chambre creuse (13), cette enveloppe souple comprenant un fourreau (15) et une bande de roulement (19), cette bande de roulement (19) présentant un profil bombé vers l'extérieur du bandage (9) ;
- la jante (7) comprenant une section axiale conformée en un siège (29), propre à recevoir le bandage (9), et une section axiale conformée en un outil (31), propre à racler le disque de
semoir, et une section axiale intermédiaire (38) qui raccorde la section d'outil (31) à la section de siège (29)
**caractérisé en ce que** :
- l'enveloppe comporte au moins un premier flanc (23), proche de la section d'outil (31), reliant le fourreau (15) à la bande de roulement (19), ce premier flanc (23) s'étendant généralement de manière radiale ou faiblement inclinée radialement ;
- cette section axiale intermédiaire (38) étant conformée en une butée axiale (39) pour le bandage (9) en correspondance de forme avec le premier flanc (23) ;
- le bandage (9) étant monté sur la section de siège (29) par l'intermédiaire du fourreau (15) dans un état axialement contraint qui maintient le premier flanc (23) en contact contre la butée axiale (39).

2. Roue selon la revendication 1, dans laquelle la butée axiale (39) et le premier flanc (23) présentent chacun un profil rectiligne.

3. Roue selon l'une des revendications 1 et 2, dans laquelle l'enveloppe souple comprend une ou plusieurs portions qui font saillie radialement du fourreau (15) ou de la bande roulement (19) dans la chambre creuse (13), ces portions étant conformée en au moins une butée radiale (58) pour la bande de roulement (19).

4. Roue selon la revendication 3, dans laquelle l'une au moins de ces portions en saillie dépasse du fourreau (15) ou de la bande de roulement (19) d'une hauteur voisine, par valeurs supérieures, à la hauteur du premier flanc (23).

5. Roue selon l'une des revendications 3 et 4, dans laquelle deux au moins des portions en saillie en regard l'une de l'autre dépassent respectivement du fourreau (15) et de la bande de roulement (19) d'une hauteur cumulée voisine, par valeurs supérieures, à la hauteur du premier flanc (23).

6. Roue selon l'une des revendications précédentes, dans laquelle la bande de roulement (19) présente une portion formant sommet (20) et l'enveloppe présente un plan médian (MP), et la portion formant sommet (20) est déportée du plan médian (MP), dans une direction qui l'éloigne du premier flanc (23).

7. Roue selon l'une des revendications précédentes, dans laquelle la section d'outil (31) comprend deux sections axiales (35 ;40) généralement tronconiques d'un bord axial de la jante (7) à la butée axiale (39), et celle de ces sections qui est la plus proche dudit bord axial est plus inclinée que l'autre relativement à une direction radiale.

8. Roue selon l'une des revendications précédentes, dans laquelle le corps (3) comprend un premier flasque (63) et un second flasque (61) montés l'un sur l'autre, et le premier flasque (63) comprend au moins la section d'outil (31) et la section de butée axiale (38), et le second flasque (61) comprend une partie au moins de la section de siège (29).

9. Roue selon la revendication 8, dans laquelle le premier flasque (63) comprend en outre au moins une partie de la section de siège (29) et le second flasque (61) comprend le reste de la section de siège (29).

10. Roue selon l'une des revendications précédentes, dans laquelle l'enveloppe souple comporte un second flanc (21), éloigné de la section d'outil (31), reliant le fourreau (15) à la bande de roulement (19).

11. Roue selon la revendication 10, dans laquelle le second flanc (21) s'étend généralement de manière radiale ou faiblement inclinée radialement.

12. Roue selon l'une des revendications 10 et 11, dans laquelle le second flanc (21) est en partie au moins sensiblement plus épais que le premier flanc (23).

13. Roue selon l'une des revendications 10 à 12, dans laquelle le bandage (9) présente une rainure annulaire (87), ménagée dans le second flanc (21), et la jante (7) présente un bord recourbé (51), engagé dans la rainure annulaire (87).

14. Roue selon l'une des revendications précédentes, dans laquelle la section de siège (29) comprend au moins une section généralement tronconique (55) qui s'évase en direction de la section d'outil (31).

15. Roue selon l'une des revendications précédentes, dans laquelle le corps (3) comprend un premier flasque (63) et un second flasque (61) montés l'un sur l'autre, le premier flasque comportant au moins la section d'outil (31), la section de butée axiale (38) et au moins une section généralement tronconique (55) de la section de siège (29).

16. Roue selon l'une des revendications précédentes, dans laquelle le bandage (9) comprend un bourrelet annulaire (41) qui dépasse de l'enveloppe souple là où le premier flanc (23) se raccorde à la bande de roulement (19).

## Patentansprüche

1. Landwirtschaftliches Rad (1), das ein Zubehör einer Sämaschinen-Scheibe (105) bildet, wobei das Rad (1) umfasst:
- einen Körper (3), der eine Felge (7) mit einem im Allgemeinen drehenden Verlauf um eine zentrale Achse (5) umfasst;
- einen Reifen halbhohler Art (9), der eine biegsame Hülle um eine hohle Kammer (13) umfasst, wobei diese biegsame Hülle eine Ummantelung (15) und eine Lauffläche (19) umfasst, wobei diese Lauffläche (19) ein in Richtung Außenseite des Reifens (9) gewölbtes Profil aufweist;
- wobei die Felge (7) einen als Sitz (29) ausgeformten axialen Abschnitt, der sich dazu eignet, den Reifen (9) aufzunehmen, und einen zu einem Werkzeug (31) ausgeformten axialen Abschnitt, der sich dazu eignet, die Sämaschinen-Scheibe abzuschaben, und einen axialen Zwischenabschnitt (38) umfasst, der den Werkzeugabschnitt (31) mit dem Sitzabschnitt (29) verbindet;
**dadurch gekennzeichnet, dass**:
- die Hülle mindestens eine erste Flanke (23) nahe dem Werkzeugabschnitt (31) beinhaltet, welche die Ummantelung (15) mit der Lauffläche (19) verbindet, wobei sich diese erste Flanke (23) im Allgemeinen radial oder radial wenig geneigt erstreckt;
- wobei dieser axiale Zwischenabschnitt (38) als axialer Anschlag (39) für den Reifen (9) in Formentsprechung mit der ersten Flanke (23) ausgeformt ist;
- wobei der Reifen (9) anhand der Ummantelung (15) in einem axial gespannten Zustand auf dem Sitzabschnitt (29) montiert ist, der die erste Flanke (23) in Kontakt am axialen Anschlag (39) hält.

2. Rad nach Anspruch 1, wobei der axiale Anschlag (39) und die erste Flanke (23) jeweils ein geradliniges Profil aufweisen.

3. Rad nach einem der Ansprüche 1 und 2, wobei die biegsame Hülle einen oder mehrere Teilabschnitte umfasst, die radial aus der Ummantelung (15) oder der Lauffläche (19) in die hohle Kammer (13) hervorstehen, wobei diese Teilabschnitte als mindestens ein radialer Anschlag (58) für die Lauffläche (19) ausgeformt sind.

4. Rad nach Anspruch 3, wobei mindestens einer dieser hervorstehenden Teilabschnitte über die Ummantelung (15) oder die Lauffläche (19) um eine der Höhe der ersten Flanke (23) in größeren Werten benachbarte Höhe hinausragt.

5. Rad nach einem der Ansprüche 3 und 4, wobei mindestens zwei der einander gegenüber liegenden hervorstehenden Teilabschnitte jeweils über die Ummantelung (15) und die Lauffläche (19) um eine der Höhe der ersten Flanke (23) in größeren Werten benachbarte kumulierte Höhe hinausragen.

6. Rad nach einem der vorstehenden Ansprüche, wobei die Lauffläche (19) einen Scheitel-Teilabschnitt (20) aufweist und die Hülle eine Mittelebene (MP) aufweist, und der Scheitel-Teilabschnitt (20) in einer Richtung von der Mittelebene (MP) versetzt ist, die ihn von der ersten Flanke (23) entfernt.

7. Rad nach einem der vorstehenden Ansprüche, wobei der Werkzeugabschnitt (31) zwei axiale, im Allgemeinen kegelstumpfförmige Abschnitte (35; 40) von einem axialen Rand der Felge (7) bis zum axialen Anschlag (39) umfasst, und jener dieser Abschnitte, der dem axialen Rand am nächsten liegt, in Bezug auf eine radiale Richtung stärker geneigt ist als der andere.

8. Rad nach einem der vorstehenden Ansprüche, wobei der Körper (3) einen ersten Flansch (63) und einen zweiten Flansch (61) umfasst, die aufeinander montiert sind, und der erste Flansch (63) mindestens den Werkzeugabschnitt (31) und den axialen Anschlagabschnitt (38) umfasst, und der zweite Flansch (61) mindestens einen Teil des Sitzabschnitts (29) umfasst.

9. Rad nach Anspruch 8, wobei der erste Flansch (63) weiter mindestens einen Teil des Sitzabschnitts (29) umfasst, und der zweite Flansch (61) den Rest des Sitzabschnitts (29) umfasst.

10. Rad nach einem der vorstehenden Ansprüche, wobei die biegsame Hülle eine zweite Flanke (21) vom Werkzeugabschnitt (31) entfernt beinhaltet, die die Ummantelung (15) mit der Lauffläche (19) verbindet.

11. Rad nach Anspruch 10, wobei sich die zweite Flanke (21) im Allgemeinen radial oder radial wenig geneigt erstreckt.

12. Rad nach einem der Ansprüche 10 und 11, wobei die zweite Flanke (21) teilweise mindestens im Wesentlichen dicker als die erste Flanke (23) ist.

13. Rad nach einem der Ansprüche 10 bis 12, wobei der Reifen (9) eine ringförmige Rille (87) aufweist, die in die zweite Flanke (21) eingearbeitet ist, und die Felge (7) einen krummen Rand (51) aufweist, der in die ringförmige Rille (87) eingeführt ist.

14. Rad nach einem der vorstehenden Ansprüche, wobei der Sitzabschnitt (29) mindestens einen im Allgemeinen kegelstumpfförmigen Abschnitt (55) umfasst, der in Richtung des Werkzeugabschnitts (31) breiter wird.

15. Rad nach einem der vorstehenden Ansprüche, wobei der Körper (3) einen ersten Flansch (63) und einen zweiten Flansch (61) umfasst, die aufeinander montiert sind, wobei der erste Flansch mindestens den Werkzeugabschnitt (31), den axialen Anschlagabschnitt (38) und mindestens einen im Allgemeinen kegelstumpfförmigen Abschnitt (55) des Sitzabschnitts (29) beinhaltet.

16. Rad nach einem der vorstehenden Ansprüche, wobei der Reifen (9) einen ringförmigen Wulst (41) umfasst, der die biegsame Hülle dort überragt, wo sich die erste Flanke (23) mit der Lauffläche (19) verbindet.

## Claims

1. An agricultural wheel (1) forming an accessory for a seed drill disc (105), said wheel (1) comprising:
- a body (3) comprising a rim (7) generally of a shape of revolution around a central axis (5);
- a semi-hollow-type tire (9) comprising a flexible case around a hollow chamber (13), this flexible case comprising a sheath (15) and a tread (19), this tread (19) having a profile domed towards the outside of the tire (9);
- the rim (7) comprising an axial section shaped as a seat (29), suitable for receiving the tire (9), and an axial section shaped as a tool (31), suitable for scraping the seed drill disc, and an intermediate axial section (38) which connects the tool section (31) to the seat section (29);
**characterized in that**:
- the case includes at least a first sidewall (23), close to the tool section (31), connecting the sheath (15) to the tread (19), this first sidewall (23) generally extending radially or slightly inclined radially;
- this intermediate section (38) being shaped as an axial stop (39) for the tire (9) in form correspondence with the first sidewall (23);
- the tire (9) being mounted on the seat section (29) by means of the sheath (15) in an axially stressed state which maintains the first sidewall (23) in contact against the axial stop (39).

2. The wheel according to claim 1, wherein the axial stop (39) and the first sidewall (23) each have a rectilinear profile.

3. The wheel according to one of claims 1 and 2, wherein the flexible case comprises one or more portions which protrude radially from the sheath (15) or from the tread (19) into the hollow chamber (13), these portions being shaped as at least one radial stop (58) for the tread (19).

4. The wheel according to claim 3, wherein at least one of these protruding portions projects from the sheath (15) or from the tread (19) by a height close, by greater values, to the height of the first sidewall (23).

5. The wheel according to one of claims 3 and 4, wherein at least two of the protruding portions facing one another project respectively from the sheath (15) and from the tread (19) by a cumulative height close, by greater values, to the height of the first sidewall (23).

6. The wheel according to one of the preceding claims, wherein the tread (19) has a top forming portion (20) and the case has a median plane (MP), and the top forming portion (20) is offset from the median plane (MP), in a direction away from the first sidewall (23).

7. The wheel according to one of the preceding claims, wherein the tool section (31) comprises two generally frusto-conical axial sections (35; 40) from an axial edge of the rim (7) to the axial stop (39), and that of these sections which is closest to said axial edge is more inclined than the other relative to a radial direction.

8. The wheel according to one of the preceding claims, wherein the body (3) comprises a first flange (63) and a second flange (61) mounted on top of each other, and the first flange (63) comprises at least the tool section (31) and the axial stop section (38), and the second flange (61) comprises at least a portion of the seat section (29).

9. The wheel according to claim 8, wherein the first flange (63) further comprises at least a portion of the seat section (29) and the second flange (61) comprises the rest of the seat section (29).

10. The wheel according to one of the preceding claims, wherein the flexible case includes a second sidewall (21), remote from the tool section (31), connecting the sheath (15) to the tread (19).

11. The wheel according to claim 10, wherein the second sidewall (21) generally extends radially or slightly inclined radially.

12. The wheel according to one of claims 10 and 11, wherein the second sidewall (21) is at least in part significantly thicker than the first sidewall (23).

13. The wheel according to one of claims 10 to 12, wherein the tire (9) has an annular groove (87), formed in the second sidewall (21), and the rim (7) has a curved edge (51), engaged in the annular groove (87).

14. The wheel according to one of the preceding claims, wherein the seat section (29) comprises at least one generally frusto-conical section (55) which widens towards the tool section (31).

15. The wheel according to one of the preceding claims, wherein the body (3) comprises a first flange (63) and a second flange (61) mounted on top of each other, the first flange including at least the tool section (31), the axial stop section (38) and at least one generally frusto-conical section (55) of the seat section (29).

16. The wheel according to one of the preceding claims, wherein the tire (9) comprises an annular bead (41) which projects from the flexible case where the first sidewall (23) is connected to the tread (19).
